# EUROPÄISCHE PATENTANMELDUNG

(11) **EP 1 898 369 A1**
(43) Veröffentlichungstag der Anmeldung: **12.03.2008**
(21) Anmeldenummer: 07113125.4
(22) Anmeldetag: 25.07.2007
(51) Int. Cl.: G07F 7/02, G06Q 20/00, H04M 17/00, G06Q 30/00

(54) **Verfahren zur Nutzung eines Telekommunikationsnetzwerks**

(30) Priorität: 25.07.2006 DE 10634889
(71) Anmelder: Peetz, Jürgen, 1190 Wien (AT)
(72) Erfinder: Peetz, Jürgen, 1190 Wien (AT)
(74) Vertreter: Gille Hrabal Struck Neidlein Prop Roos

(57) **Zusammenfassung**

Die Erfindung betrifft ein Verfahren zur Nutzung eines Telekommunikationsnetzwerks, insbesondere eines Mobilfunknetzes. Das erfindungsgemäße Verfahren mit den angegebenen Schritten erlaubt eine neuartige zur Verfügungsstellung einer zeitlich oder mengenmäßig beschränkten Nutzung eines Telekommunikationsnetzwerkes.

## Beschreibung

Die Erfindung betrifft ein Verfahren zur Nutzung eines Telekommunikationsnetzwerks, insbesondere eines Mobilfunknetzes.

Telekommunikationsnetzwerke und insbesondere Mobilfunknetze werden üblicherweise entgeltlich genutzt. Bei Laufzeitverträgen wird eine monatliche Grundgebühr zusammen mit den nutzungsabhängigen Entgelten in Rechnung gestellt. Das Entgelt ist vom Kunden zu bezahlen bzw. wird per Lastschrift/Einzugsermöchtigung vom Konto des Kunden abgebucht.

Bei sogenannten Prepaid- oder Postpaid-Verträgen werden lediglich die Nutzungsentgelte von einem Guthaben abgezogen bzw. der Kunde muss für einen Ausgleich der in einem bestimmten Zeitraum entstandenen Kosten sorgen. Bei Prepaid-Karten ist aus Kundensicht ärgerlich, dass bei aufgebrauchten Gesprächsguthaben keine Anrufe mehr möglich sind und der Kunde daher stets vorausschauend für ein angemessenes Guthaben sorgen muss. Die Erhöhung des Guthabens erfolgt in der Regel durch den Erwerb eines Cash-Karte, deren Code über die Tastatur des Mobiltelefons eingegeben werden muss und an die Netzwerkbetreiber übertragen wird. Beim Eingeben einer gültigen Nummer wird das Guthaben erhöht.

Aus der EP-A-1 128 340 ist ein Verfahren zum Aufladen eines Kundenkontos für Telekommunikationsdienste und ein entsprechendes Aufladesystem bekannt. Nach dem Bezahlen der gewünschten Anzahl von Werteinheiten an eine Bezahlstelle wird eine Online-Verbindung zwischen der Bezahlstelle und dem Netzwerkbetreiber aufgebaut. Eine Kundenkontoauflade-Anfrage wird von der Bezahlstelle an den Netzwerkbetreiber übertragen, auf deren Grundlage eine Überprüfung der Bonität der Bezahlstelle erfolgt.

Zur Erhöhung der Kundenbindung sind Bonus- bzw. Prämien-Systeme weit verbreitet, wie zum Beispiel Payback, unternehmensspezifische Kundenkarten, American Express Membership Rewards, Lufthansa Miles&More und dergleichen. Alle diese Systems, die durch umsatz- und geschäftsabhängiges Sammeln von Punkten ein Guthaben - nachfolgend stets als "Bonusguthaben" bezeichnet - erzeugen und dadurch eine Kundentreue in Bezug auf die unter dem entsprechenden Bonusprogramm zusammenarbeitenden Unternehmen erreichen, werden nachfolgend "Bonusprogramme" genannt. Der Kunde erhält dadurch bei den Programmbetreibern, den "Bonuspartnern" ein Bonusguthaben. Das Bonusguthaben kann gegen Prämien eingetauscht werden, wie z.B. Jahresgebühren für Kreditkarten, Sachprämien, Reisen oder Wertgutscheine. Teilweise sind die Bonusguthaben eines Bonuspartners nach einem Umrechnungsfaktor in Bonusguthaben eines anderen Bonuspartners konvertierbar und übertragbar.

Auch sind Prepoid-Vertröge bekannt, bei denen der angerufene Vertragspartner Prepaid-Guthaben erhält als Belohnung dafür, dass er sich in dem entsprechenden Netz anrufen lässt.

Es ist Aufgabe der vorliegenden Erfindung insbesondere ein für den Nutzer einfaches und preiswertes Verfahren zur Nutzung eines Telekommunikationsnetzwerkes zu schaffen.

Diese Aufgabe wird gelöst durch ein Verfahren bzw. Computersystem gemäß der unabhängigen Ansprüche. Vorteilhafte Ausgestaltungen des Verfahrens sind Gegenstand der Unteransprüche.

Das erfindungsgemäße Verfahren mit den angegebenen Schritten erlaubt eine neuartige zur Verfügungsstellung einer zeitlich oder mengenmäßig beschränkten Nutzung eines Telekommunikationsnetzwerkes. Dabei ist auf einem ersten Server ein erster Datensatz gespeichert, der der Nutzungsberechtigung des Nutzers auf dem entsprechenden Telekommunikationsnetzwerk entspricht. Damit kann beispielsweise bei einem Mobilfunkprovider die auf dessen Server gespeicherten Gesprächsguthaben (beispielsweise Prepaid-Kartenguthaben) für einen bestimmten Nutzer gemeint sein. Der erste Datensatz im Sinne der Erfindung muss nicht notwendigerweise ein Guthaben, wie z. B. bei der Prepaidkarte, aufweisen. Vielmehr ist damit gemeint, dass ein Datensatz existiert, auf dem Zahlungseingänge (z. B. Aufladen der Prepaid-Karte, Zahlungseingänge bei Postpaid-Karten) und guthabenmindernde Vorgänge (z. B. Verbindungsdaten) nachgehalten werden. Der erste Datensatz entspricht daher einem Kundenkonto, gleich ob Prepaid oder Postpaid.

Es ist ferner eine Vielzahl weiterer Datensätze vorgesehen, die ebenfalls dem Nutzer zugeordnet sind, aber lediglich telekommunikationsnetzwerkfremde Vorgänge bzw. Guthaben betreffen. Diese Datensätze sind daher in der Regel auch nicht bei dem Betreiber des Telekommunikationsnetzwerkes untergebracht bzw. gespeichert und sind dessen Zugriff entzogen. Die weiteren Datensätze können insbesondere Bonusguthaben bei Bonuspartnern sein, also z. B. Meilen von der Fluggesellschaft A, Punkte bei Kaufhaus B und Herzen von Raumausstatter C. Es handelt sich dabei also nicht nur oder gar nicht um Datensätze, die mit der Nutzung des Telekommunikationsnetzwerks in Verbindung stehen, wie es z. B. beim Stand der Technik bekannt ist, bei denen der Nutzer eine Vergütung vom Mobilfunkprovider erhält, wenn er auf seinem Mobiltelefon angerufen wird. Wesentlich für die Erfindung ist, dass die Datensätze nicht ausschließlich der letztgenannten Art sind.

Wesentlich für die Erfindung ist, dass mehrere, statt nur ein Datensatz zur Verfügung steht, also der Nutzer eine Auswahl treffen kann, welchen der Datensätze er verwenden möchte, z. B. den von Fluggesellschaft A, Kaufhaus B oder Raumausstatter C. Für die Erfindung ist es nicht wesentlich, wo die weiteren Datensätze gespeichert sind. Der häufigste Fall wird sein, dass die weiteren Datensätze auf einer entsprechenden Vielzahl von weiteren Servern, die insbesondere bei den jeweiligen Bonuspartnern vorgehalten werden, gespeichert sind. Zum Abfragen der den Nutzer zur Verfügung stehenden Datensätzen ist daher eine Abfrage bei der Vielzahl von weiteren Servern nötig, z. B. wird also beispielsweise jeweils eine Verbindung zu den Servern der Fluggesellschaft, des Kaufhauses und des Raumausstatters hergestellt. Dabei bleibt in der Regel die Verwaltung der weiteren Datensätze ausschließlich unter Kontrolle der jeweiligen Serverbetreiber, mit Ausnahme der später erläuterten ersten Veränderung der weiteren Datensätze für den Fall einer Auswahl durch den Nutzer. So wird z. B. die Fluggesellschaft das Meilenkonto ihrer Fluggäste unter eigener Kontrolle auf ihrem Server durchführen und dabei naturgemäß eine Vielzahl von Kundendaten vorhalten, die nicht zugleich Nutzer des Telekommunikationsnetzwerks sind. Diese werden hier als Fremdnutzer bezeichnet. Die Fluggesellschaft wird im Fall der in Anspruchnahme der Meilen das Meilenkonto des entsprechenden Nutzers entsprechend belasten oder vorläufig sperren.

Es ist naturgemäß auch denkbar, dass die weiteren Datensätze der teilnehmenden Unternehmen, z. B. Fluggesellschaft, Kaufhaus und Raumausstatter, auf einen speziell dafür vorgesehenen, zweiten Server zentral gespeichert werden. Dadurch vereinfacht und beschleunigt sich die Abfrage der weiteren Datensätze. Der zweite Server kann dabei unter Aufsicht und Kontrolle der jeweiligen Unternehmen stehen oder vollständig der Kontrolle des Telekommunikationsnetzwerksbetreibers unterliegen. Dabei ist z. B. denkbar, dass standardmäßig nur ein Teil der Datensätze, z. B. das Bonusguthaben, auf den zweiten Server übertragen wird. Analog können die weiteren Datensätze auch direkt auf den ersten Server gespeichert sein. Eine denkbare Anwendung für einen zweiten Server ist das Rabattsystem Payback, welches ein einheitliches Bonussystem für unterschiedliche Anbieter bereitstellt. Dieser Server speichert und verwaltet die bei den Anbietern getätigten Umsätze zentral, so dass bei Bedarf keine Abfrage unterschiedlicher Server nötig ist.

Für die erfindungsgemäß bewirkte einfache, schnelle und wenig personalintensive Konvertierung von beliebigen Bonusguthaben fremder Anbieter im Nutzungsbefugnis des Telekommunikationsnetzwerks eines Anbieters kommt es nicht darauf an, wo die weiteren Datensätze gespeichert sind.

Für das Verfahren sind die folgenden Schritte notwendig:

Zunächst verschafft sich der Nutzer einen Überblick über die zur Verfügung stehenden weiteren Datensätze, z. B. Bonusguthaben oder Anbieter von zu nutzenden Bonussystemen. Dazu müssen die weiteren Datensätze auf das Telekommunikationsgerät des Nutzers übertragen werden mittels des Telekommunikationsnetzwerks. Diese Übertragung ist einfacher und schneller als die noch weit verbreitete telefonische oder schriftliche Anforderung von Prämien. Auch hier kommt es nicht darauf an, von welchem Server die weiteren Datensätze übertragen werden und es ist lediglich erfindungsrelevant, dass diese zum Telekommunikationsgerät des Nutzers gelangen.

Damit der Nutzer von den übertragenen Datensätzen Kenntnis erhält, können diese z. B. auf dem Display des Mobiltelefons angezeigt werden. Der Nutzer erhält dadurch eine leicht erfassbare Übersicht über die zur Verfügung stehenden Datensätze bzw. Bonusguthaben. Er sieht z. B. die folgende Tabelle

| | |
|---|---|
| Fluggesellschaft A | 1 000 Miles |
| Kaufhaus B | 100 Punkte |
| Raumausstatter C | 20 Herzen |

und kann bequem auf die übliche Art eine Auswahl treffen, z. B. durch Verschieben einer Markierung und bestätigen der Auswahl durch Drücken einer Taste. Die Datensätze können auch durchnummeriert sein, wobei die Auswahl durch das Drücken der entsprechenden Zahlentaste auf dem Mobilfunkgerät erfolgt. Für die o. g. Darstellung und Auswahl ist vorzugsweise ein entsprechendes Computerprogramm auf dem Telekommunikationsgerät installiert, welches vorzugsweise zuvor über das Telekommunikationsnetzwerk übertragen worden ist. Die Übertragung des Computerprogramms über mobilfunkbasierte Datenfernübertragung bietet den Vorteil einer einfachen, schnellen und spontan möglichen Installation des Programms. Die dazu notwendigen Techniken sind üblich, z. B. SMS, MMS, GPRS und/oder UMTS oder jede andere denkbare mobilfunkbasierte Datenfernübertragung.

Das Programm kann erfindungsgemäß natürlich auch völlig losgelöst von dem Telekommunikationsgerät über eine entsprechende Internetanwendung aktiviert, übertragen oder bedient werden. Es fällt ausdrücklich ebenfalls unter die Erfindung, dass die Schritte b) - d) ganz oder teilweise nicht über das Telekommunikationsgerät, sondern über einen anderen Weg, z. B. ein über den Computer des Nutzers zu bedienendes Internetportal erfolgen.

Schließlich sind Lösungen denkbar, bei denen das Programm lediglich auf einem der Server installiert ist und über das Telekommunikationsnetzwerk läuft, Auch ist eine Bedienung über SMS, MMS und dergleichen denkbar, bei der die Übertragung von Informationen ganz oder teilweise z. B. über SMS läuft und/oder der Nutzer in einer Antwortmail seine Auswahl trifft. Es ist hierbei ein Standardmobilfunkgerät für die Bedienung ausreichend, welches nicht über Browser, GPRS, UMTS etc. verfügen muss. Für Telekommunikationsgeräte, die über kein geeignetes Display / Hardware /Software verfügen oder in Fällen, bei denen der Anwender ausschließlich über Sprache an dem erfindungsgemäßen Verfahren teilnehmen möchte, können in üblicher Weise die Datensätze mittels Sprachcomputer vorgelesen werden und der Nutzer trifft seine Auswahl durch Sprache oder Drücken einer Taste z. B. mittels Multifrequenzwählverfahren MFWV,

In jedem Fall ist es notwendig, dass nachdem der Nutzer seine Auswahl getroffen hat, diese auf einen der Server übertragen wird. Auch hier kommt es nicht darauf an, welcher Server diese Entscheidung entgegen nimmt und weiter verarbeitet. Wesentlich ist lediglich, dass eine entsprechende Veränderung des ersten Datensatzes und der weiteren Datensätze am jeweiligen relevanten Speicherort erfolgt. In der Regel wird die Veränderung des ersten Datensatzes, der den Rechnungsdaten des Nutzers beim Telekommunikationsnetzwerkbetreiber entspricht, auf dem ersten Server vorliegen und dazu führen, dass der Nutzer mehr Nutzungsguthaben erwirbt bzw. sein Abrechnungsbetrag für bereits erfolgte oder zukünftige in Anspruchnahme des Telekommunikationsnetzwerks reduziert wird. Gleichzeitig wird derjenige der weiteren Datensätze, den der Nutzer ausgewählt hat, verändert, In der Regel handelt es sich hierbei um Bonusguthaben, z. B. Meilen, Punkte, Herzen, wobei dieses Bonusguthaben entsprechend belastet wird.

Vorzugsweise wird das erfindungsgemäße Verfahren dadurch gestartet, dass der Nutzer eine Handlung vornimmt, zum Beispiel mittels des Telekommunikationsgeräts eine bestimmte Rufnummer anruft, das Computerprogramm startet, eine SMS, MMS oder dergleichen absendet. Eine weitere Möglichkeit ist dabei, dass das Verfahren automatisch immer dann gestartet wird, wenn bei einer Prepaid-Karte das Guthaben aufgebraucht ist bzw. einen bestimmten Wert unterschreitet oder bei einer Postpaid-Karte ein bestimmter Rechnungsbetrag überschritten wird. Schließlich kann auch nach dem Ende einer Nutzung des Telekommunikationsgeräts das Verfahren ablaufen, damit der Nutzer entscheiden kann, ob er bezahlen oder Bonusguthaben erfindungsgemäß einlösen möchte.

Die zum Start des erfindungsgemäßen Verfahrens und/oder zur Erhöhung des Bonusguthabens bzw. der mengenmäßigen Nutzungsberechtigung des Telekommunikationsnetzwerks führende Handlung kann durch ein beliebiges zuvor vom Bonuspartner definiertes Ereignis ausgelöst werden, wie z. B.
- das Herantreten an ein Werbeschild mit einem Code mit der Aufforderung, diesen zur Erhöhung des Bonusguthabens bei dem entsprechenden Bonuspartner bzw. zur Erhöhung der mengenmäßigen Nutzungsberechtigung des Telekommunikationsnetzwerks in das Endgerät des Nutzers einzugeben;
- Der Erwerb einer Ware mit einem Code mit der Aufforderung, diesen zur Erhöhung des Bonusguthabens bei dem entsprechenden Bonuspartner bzw. zur Erhöhung der mengenmäßigen Nutzungsberechtigung des Telekommunikationsnetzwerks in das Endgerät des Nutzers einzugeben; oder
- das Inkontakttreten mittels Funkwellen oder IR-Kommunikation in einer mit Werbung ausgestattete Zone (z. B. mittels Bluetooth, RFID, oder dergleichen),

In einer Ausgestaltung ist vorgesehen, dass die weiteren Datensätze in einem weiteren Schritt umgerechnet werden in Werte, die einer möglichen zeitlichen oder mengenmäßigen Nutzungsberechtigung entsprechen, z. B. Inlandsgespröchsminuten, SMS, Onlinezeiten oder Onlinevolumen, SMS, Guthaben in Euro, Rabatt auf den Normaltarif. Dabei wird dem Nutzer eine Tabelle angezeigt oder mittels Sprachcomputer vorgelesen, bei der neben oder anstelle des Bonusguthabens auch die für das Telekommunikationsnetzwerk relevanten Nutzungsberechtigungen angezeigt werden, wie z.B.

| | | |
|---|---|---|
| Fluggesellschaft A | 1 000 Miles | 50 min |
| Kaufhaus B | 100 Punkte | 9 min |
| Kaufhaus B | 100 Punkte | 10 SMS |
| Raumausstatter C | 20 Herzen | 100 MB UMTS |
| Rabattsystem D | 100 Euro | 50% Rabatt auf eingehende Anrufe im Ausland |
| Parkhaus E | 100 Stunden | 4 Euro Nutzungsguthaben |

Die Information "Fluggesellschaft A - 1000 Miles - 50 Minuten" versteht der Nutzer, dass er bei der Fluggesellschaft A 1000 Meilen Bonusguthaben hat und diese z. B. in 50 Minuten Gesprächsguthaben in seinem Mobilfunknetz umwandeln kann. Das Guthaben kann bedeuten, dass ihm seine Prepaid-Karte um einen entsprechenden Betrag erhöht wird oder dass er 50 Freiminuten bei einem Postpaid-Vertrag hat. Die Umrechnung von Bonutguthaben in für die Nutzung des Telekommunikationsnetzwerkes relevantes Guthaben erleichtert dem Nutzer die Übersicht, wo er Bonusguthaben hat und wieviel Telekommunikationsguthaben er dafür erwerben kann.

Dadurch, dass die Auswahl der weiteren Datensätze (z.B. Bonusguthaben bzw. Bonuspartner, mittels des Telekommunikationsgeräts vorgenommen wird, kann der Nutzer besonders flexibel auf die Angebote der Bonuspartner reagieren und beispielsweise seine Prepaid-Karte aufladen ohne diese zeit-und wegeaufwendig zu erwerben, aufzurubbeln und freischalten zu lassen. Prämien unterschiedlichster, vorzugsweise nicht mit dem Betrieb des jeweiligen Telekommunikationsnetzes befasster Anbieter, können auf Knopfdruck verglichen, ausgewählt und eingelöst werden, wobei zwischen Auswahl und Einlösung lediglich Sekunden liegen können.

Im Gegensatz zum sogenannten "AutoTopUp" bei Prepaid-Verträgen kann der Nutzer selbst auswählen, welches Guthaben in Form von Bonuspunkten er für seinen Konsum nutzen möchte.

In der Regel ist es nicht gewünscht, das gesamte Bonusguthaben in Gesprächsminuten einzutauschen. Daher ist vorzugsweise vorgesehen, dass ein vom Nutzer festlegbarer oder von den Programmbetreibern vorgegebener Mindest-, Maximal- und/oder Standardwert vorgegeben ist. Beispielsweise kann Fluggesellschaft A festlegen, dass der Nutzer auswählen kann, ob das gesamte Guthaben oder ein Standardwert, z.B. 100 Meilen, eingelöst werden. Kaufhaus B kann festlegen, dass maximal 20% der Bonuspunkte einlösbar sind. Raumausstatter C gestattet lediglich eine Übertragung von mindestens 10 Herzen. Derartige Bedingungen können beim Wiedergeben und Auswählen, z.B. in einer Menustruktur, dem Nutzer angezeigt werden, so dass er sich Fehleingaben erspart und die Programmbedingungen nicht anderweitig erfragen muss.

In einer weiteren Ausgestaltung sind auf dem zweiten bzw. den weiteren Servern auch Fremddatensätze gespeichert, also solche, die nicht in Verbindung mit Nutzern des Telekommunikationsnetzwerkes stehen. Über diese Fremdnutzer existiert beim Telekommunikationsnetzwerkbetreiber daher auch kein erster Datensatz. Daher kann der ganz normale Datenbestand der Bonuspartner verwendet werden, ohne dass eine separate Datenbank angelegt werden muss. Es wird einfach im Gesamtdatensatz des Bonusprogrammpartners nach den Daten des Nutzers gesucht, der an dem erfindungsgemäßen Verfahren teilnimmt. Dadurch müssen diese zweiten bzw. weiteren Server, die über Datenfernübertragung mit dem ersten Server verbunden sind, auch nicht auf dem gleichen Grundstück wie der erste Server stehen und/oder nicht vom Betreiber des Telekommunikationsnetzwerks administriert werden. Die Bonuspartner behalten somit die volle Kontrolle über ihre Daten mit Ausnahme des erfindungsgemäß umgewandelten Bonusguthabens.

In einer weiteren Ausgestaltung der Erfindung ist vorgesehen, dass auf dem Display das Betreiber Logo des jeweiligen Bonuspartners dargestellt wird, z.B. Fluggesellschaft A. Mit Auswahl des Bonuspartners wird also ein im vorhinein festgelegtes Logo oder Wort auf dem Display des Nutzers dargestellt; dieses kann der Name/Logo des Bonuspartners oder ein beliebiges anderes Zeichen sein, welches der Bonuspartner für zweckmäßig hält, Wichtig ist nur, dass es sich hier nicht um das Betreiberlogo / Name des eigentlichen Providers (z. B. Eplus) handelt. Betreiberlogo im Sinne der Erfindung ist also eine vom Bonuspartner ausgewählte Botschaft, die das normale Betreiberlogo des Providers ersetzt. Der Nutzer identifiziert sich daher stärker mit dem jeweiligen Bonuspartner, erregt gegebenenfalls Aufmerksamkeit durch das besondere Betreiberlogo und hat - solange das Betreiberlogo sichtbar ist - die Gewissheit, am Bonustelefonieren teilzunehmen. Das Betreiberlogo kann natürlich auch Werbebotschaften beinhalten. Dadurch das die Teilnehmer an dem erfindungsgemäßen Verfahren - nachfolgend Bonustelefonie genannt - zuvor eingewilligt haben Werbung zu empfangen, kann insbesondere während ein bestimmter Bonuspartner ausgewählt wurde der Bonuspartner Werbemittel, beispielsweise SMS, MMS oder e-mails an das entsprechende Telekommunikationsgerät senden. Werbemittel sind auch Angebote.

Dadurch, dass das Verfahren aus Kundensicht lediglich auf dem Endgerät des Kunden - ohne Nutzung eines anderen Kommunikationsweges (telefonisch, Brief, email, etc) - durchgeführt wird, erfolgt ohne Umwege eine Erhöhung des Guthabens. Dies Erlaubt vorteilhafterweise eine besonders direkte Verbindung zwischen Bonuspartner und Endkunde, z. B. für Realtime-Werbe- und -Marketingzwecke, Das Verfahren erlaubt also insbesondere das spontane, einfache Aufladen des Telefonieguthabens aus verteilten Bonussystemen unterschiedlicher Bonuspartner und dabei gleichzeitig eine enge Verknüpfung von Werbung und Marketing des zum Aufladen des Telefonieguthabens genutzten Bonuspartners über das gleiche System - nämlich insbesondere Mobiltelefonie, Da das Verfahren vom Nutzer ausschließlich mittels seines Endgeräts (z. B. Mobiltelefon) gesteuert wird und somit direkt ohne Umweg zur Erhöhung des Guthabens führt, ist vorteilhafterweise eine direkte und genehmigte Verbindung zwischen Bonuspartner und Nutzer möglich bzw. erlaubt, die der Bonuspartner für Werbe- und Marketingzwecke nutzen kann.

In einer zentralen Datenbank, die in der Regel mit dem ersten Server, der dem Telekommunikationsnetzwerksbetreiber zugeordnet ist, in Zusammenhang steht, können eine Vielzahl von Zuordnungen hinterlegt sein, die den Ablauf des erfindungsgemäßen Verfahrens einfacher, effektiver und flexibler gestalten. Dazu gehören insbesondere folgende Tabellen:
- Die Zuordnung "Kunden zu Teilnahme an Bonussystem oder Bonuspartnern" ermöglicht, dass für einen bestimmten Nutzer bekannt ist, in welchen Bonussystemen er eingeschrieben ist, so dass die Abfragen bei den entsprechenden Bonusdatenbanken gezielt vorgenommen und vergebliche Abfragen vermieden werden können.
- Die Zuordnung "Bonuspartner-Daten zu den Bonussystemen" betrifft die besonderen Eigenschaften eines jeden Bonussystems, zum Beispiel Mindest- oder Maximalguthaben, zeitliche Beschränkungen, Ausschlüsse.
- Die Zuordnung "Bonussysteme/Bonuspartner zu Umrechnungsfaktoren" definieren, wieviele Einheiten des Bonussystems/Bonuspartners herangezogen werden müssen, um eine Nutzungseinheit, z.B. 1 Minute telefonieren oder eine SMS zu erhalten.
- Die Zuordnung "Bonuspartner zu Betreiberlogo und/oder Werbemittel" ermöglicht es, dem Nutzer, der einen bestimmten Bonuspartner für die Bonustelefonie ausgewählt hat, entsprechende Botschaften zukommen zu lassen. Dadurch, dass die entsprechenden Informationen zentral gesammelt sind, oder zumindest zentral hinterlegt ist, von wo die Betreiberlogos/Werbemittel abgerufen werden können, ergibt sich ein zügiger Ablauf des Verfahrens und eine geringere Fehleranfälligkeit, Ein Betreiberlogo kann auch eine Markenname oder dergleichen sein.

In einer konkreten Umsetzung der Erfindung, nämlich der bevorzugten Anwendung zur Umwandlung von Bonusguthaben in Mobilfunk-Gesprächsguthaben, ist zunächst vorgesehen, dass der Kunde des Telekommunikationsnetzwerkbetreibers, z.B. Mobilfunkproviders, in einer Vielzahl von Bonusprogrammen unterschiedlicher Bonuspartner eingeschrieben ist. Bei jedem dieser Bonuspartner verfügt der Kunde daher über ein bestimmtes Bonusguthaben, welches in der Regel mit den bei den einzelnen Bonuspartnern getätigten Umsätzen korreliert. In einem ersten Schritt werden nun alle Bonusguthaben der an dem Programm teilnehmenden Bonuspartnern, bei denen der Kunde registriert ist, abgefragt, in eine nutzungsorientierte vergleichbare Form gebracht und dem Kunden zugänglich gemacht, beispielsweise auf dem Display seines Handys. Er sieht also eine Übersicht und kann sich einen Überblick über die von ihm angesammelten Bonusguthaben verschaffen. In einem zweiten Schritt trifft der Kunde eine Auswahl, welches Bonusguthaben bzw. welchen Bonuspartner er auswählt, um dieses bzw. diesen zu belasten zu Gunsten seines Guthabens auf seinem Kundenkonto bei dem Telekommunikationsnetzvwerkbetreiber,

Dies hat für den Kunden den Vorteil, dass er die bei einer Vielzahl von Bonuspartnern hinterlegten Bonusguthaben, beispielsweise Meilen, Punkte, etc. einheitlich, einfach, bequem und schnell insbesondere in Gesprächsguthaben oder mobil nutzbare Datenvolumen verwandeln kann und somit keine überflüssigen oder nutzlosen Prämien erwirbt, sondern Geld spart, da mit den Prämien die Gesprächszeit bezahlen kann. Aus Sicht des Bonusprogrammbetreibers gestaltet sich die Prämieneinlösung preiswerter, da alle Vorgänge über Computer abgewickelt werden. Übliche Prämienprogramme erfordern dagegen einen höheren Aufwand, zum Beispiel Hotline, Bestellannahme, Verpackung, Versand etc. Sofern die Datenbanken, die das Bonusguthaben verwalten, unmittelbar an die Bezahlstationen angeschlossen sind, ist es sogar möglich, dass der Kunde unmittelbar nach Tätigung eines Umsatzes diesen sofort in Guthaben zum Telefonieren umwandeln kann. Dadurch, dass die Belohnung bzw. Bonifizierung der bezogenen und bestellten Leistung in Form eines Gesprächsguthabens sehr zeitnah nach dem Kauf und ohne komplizierte, langwierige Beantragung der Prämieneinlösung umgesetzt werden kann, entsteht eine besonders starke Präferenz des Kunden zu Gunsten eines Bonuspartners.

Der Gedanke der Erfindung kann auch auf andere Bereiche der Zurverfügungstellung von Netzwerkkapazitäten, die kein Telekommunikationsnetzwerk betreffen, übertragen werden, z. B. die mengen- oder zeitmäßige Versorgung mit Energie (Gas, Strom, Fernwärme) oder Wasser.

Die Erfindung kann aber ausdrücklich auch lediglich im Einblenden einer Information, z. B. Marken- oder Firmenname des Bonuspartners, anstelle des normalen Betreiberlogos (z. B. Eplus) bei Erwerb von Zusatzguthaben von einem Bonuspartner, bestehen. Der Nutzer erwirbt auf beliebige Art - also nicht auf die oben als erste Erfindung beschriebene Weise - vom Bonuspartner Zusatzguthaben und erlaubt dabei dem Bonuspartner die Zusendung von Werbebotschaften und/oder ein vom Bonuspartner zu bestimmendes Betreiberlogo für die Dauer der Nutzung des Zusatzguthabens.

Das Verfahren kann z. B. wie folgt mittels Mobilfunkgerät ausgeführt werden:
- Der Nutzer erwirbt zu einem bestehenden Mobilfunkvertrag Zusatzguthaben - ähnlich wie bei einer PrePaid Karte;
- Das Zusatzguthaben steht in Zusammenhang mit einem Bonuspartner, z. B. einem Kaufhaus. Das Zusatzguthaben kann käuflich erworben werden oder ist eine Art Rabatt für getätigte Umsätze beim Bonuspartner.
- Der Nutzer löst das Zusatzguthaben ein; z. B. durch Übersendung eines Codes an den Provider oder eine andere verwaltenden Stelle mittels Internet oder SMS und erhöht damit das Guthaben seines Mobilfunkvertrages,
- Optional erhält der Nutzer die AGB oder vergleichbare Bestimmungen zugesandt, insbesondere mittels SMS und bestätigt diese, z. B. durch Rücksendung eines ihm zugesandte Codes. Dadurch wird z. B. die Übermittlung von Werbebotschaften an den Nutzer genehmigt.
Auf dem Display des Mobilfunkgerät wird nun anstelle des Providers ein vom Bonuspartner ausgewählter Text/Logo/Werbebotschaft eingeblendet und optional Werbebotschaften/Angebote an das Mobilfunkgerät mittels SMS/MMS versendet.

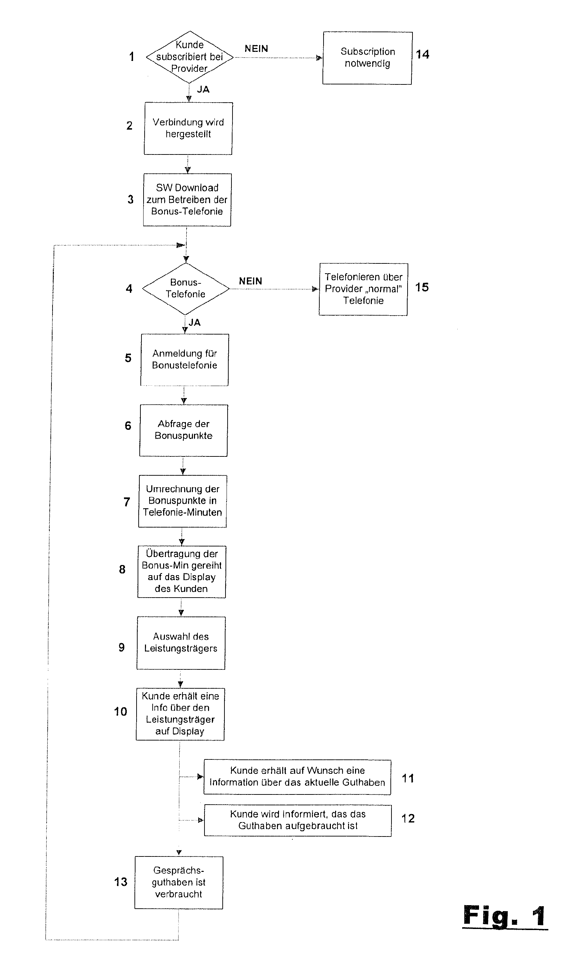

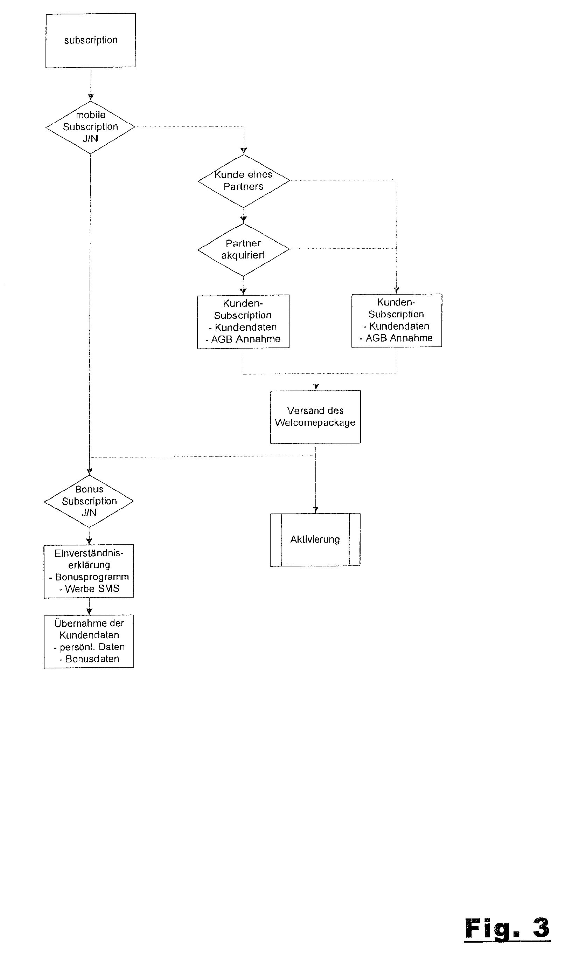

Weitere Vorteile ergeben sich aus der folgenden Beschreibung und der beigefügten Zeichnungen. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Dabei zeigen Fig. 1 bis Fig. 6 Ablaufdiagramme bezüglich
Fig. 1: eines Ausführungsbeispiels der Erfindung aus Sicht des Kunden;
Fig. 2: Aktivierung und Austausch der SIM-Karte;
Fig. 3: der Subskription eines Kunden;
Fig. 4: der Bonusdatenbank;
Fig. 5: der Mobilfunksubskription, der Bonusprogrammsubskription und der Erfassung der Bonuspartner; und
Fig. 6: der Anfrage der Bonuspunkte, der Umrechnung derselben und der Bonustelefonie.

Das Ablaufdiagramm in Figur 1 zeigt, dass der Kunde sich zunächst bei seinem Provider subskribiert 1, also eine entsprechende Nutzungsvereinbarung mit diesem abschließt. Dieser kann zum Beispiel ein herkömmlicher Mobilfunkprovider oder ein Prepaid-Provider sein. Praktischerweise handelt es sich dabei um einen eigens für die Bonustelefonie bereitgestellten Provider. Die Subskription kann auf verschiedene Arten erfolgen, nämlich durch den Kunden selbst online mittels PC, persönlich oder über Datenfernübertragung mittels des Mobiltelefons,

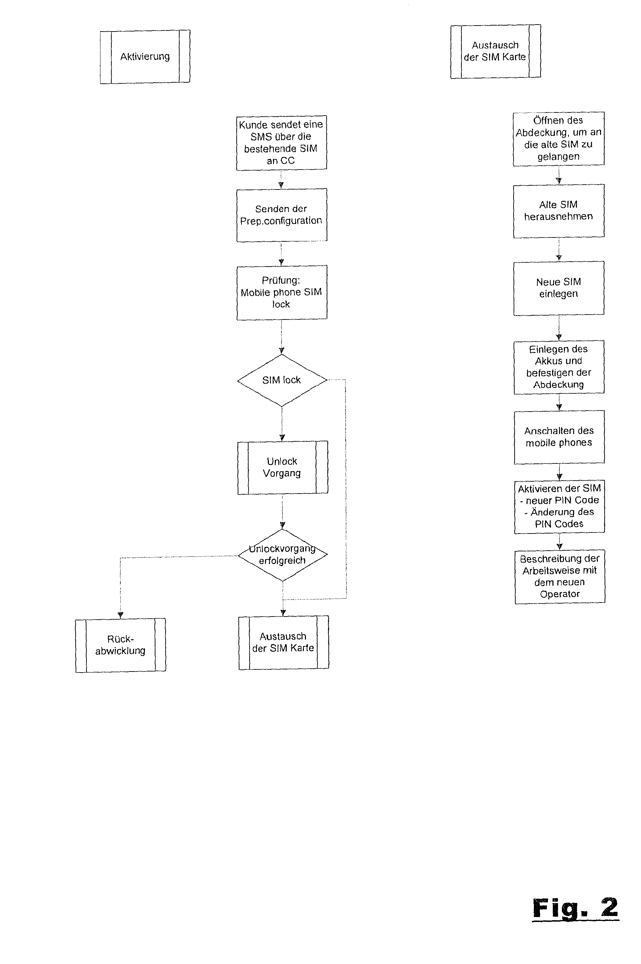

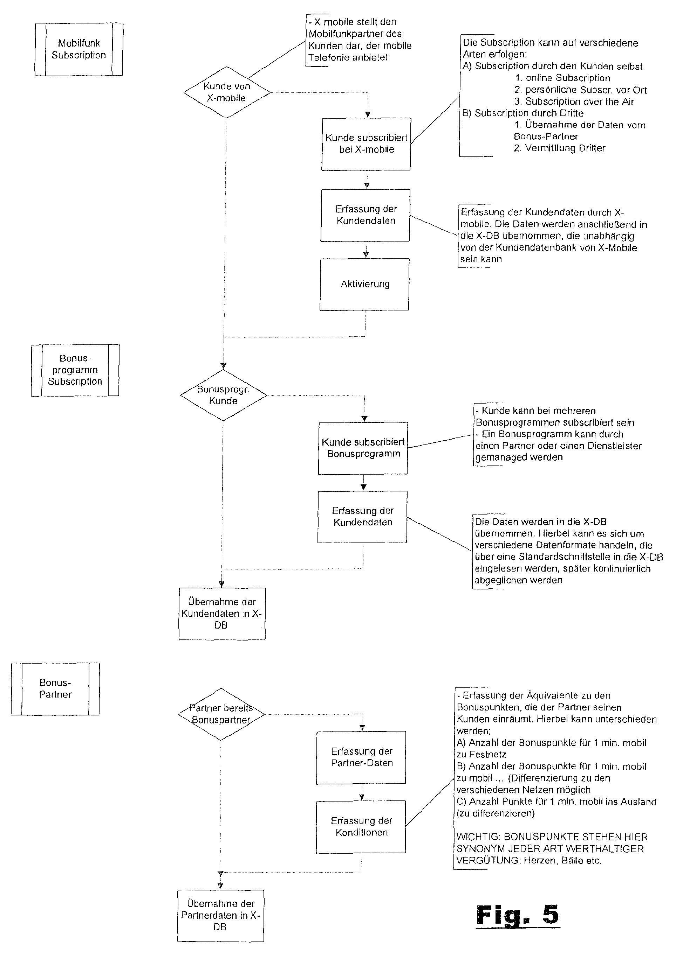

Auch Dritte können Subskriptionen vornehmen, indem die Daten vom Bonuspartner übernommen werden bzw. auf Vermittlung Dritter. In ähnlicher Weise erfolgt die Subskription zu den einzelnen Bonusprogrammen, die durch den Kunden selber, durch den Partner oder durch einen Dienstleister vorgenommen wird. Dabei wird auch auf Fig. 2 und 5 Bezug genommen.

Im nächsten Schritt wird eine Verbindung hergestellt 2, um ein Programm auf das Mobilfunkgerät des Nutzers herunterzuladen 3, welches die für die Bonustelefonie spezifischen Funktionen sicherstellt, insbesondere die Anmeldung, die Abfrage, die Auswahl und die Zurverfügungstellung weiterer Informationen (z. B. Werbung). Die Verbindung kann dabei als Push- oder Pull-Service hergestellt werden und wird grundsätzlich mittels Datenfernübertragung (z. B. GPRS) hergestellt, um Programmänderungen und -aktualisierungen jederzeit durchführen zu können. Daran schließt sich die eigentliche Bonustelefonie 4-13 an, die auf dem unter 3) heruntergeladenen Programm basiert. Der Kunde entscheidet in 4), ob er an der Bonustelefonie 4-13 teilnehmen oder zu den normalen Bedingungen des Providers telefonieren 15 möchte.

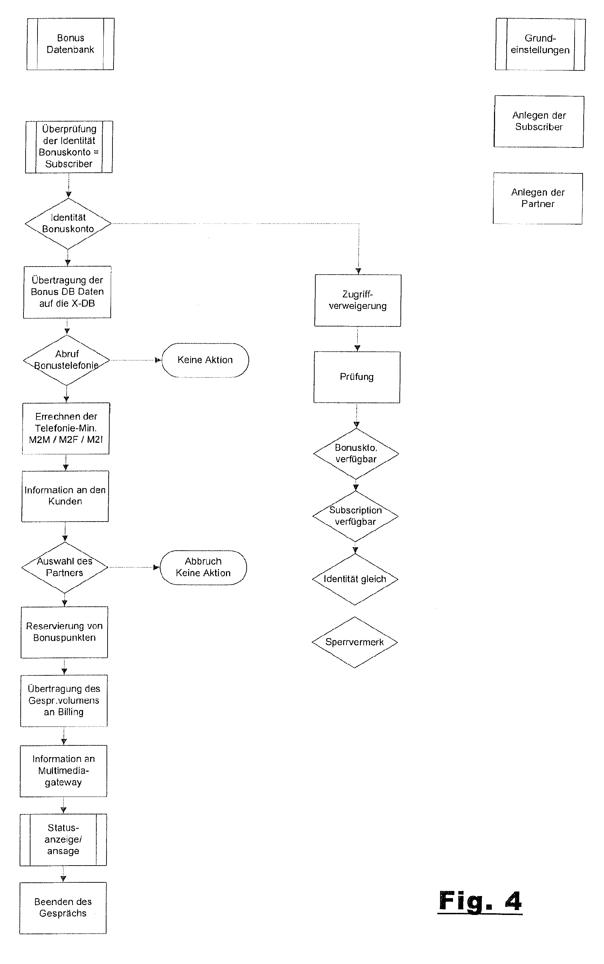

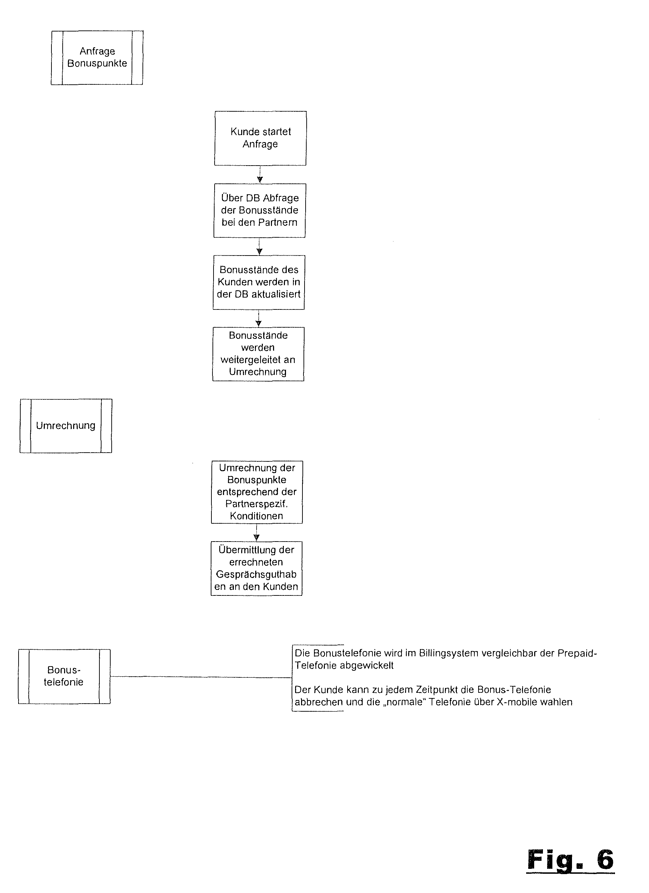

Falls der Kunde zu Lasten von Bonuspunkten telefonieren möchte, meldet er sich an 5 für Bonustelefonie. Die Anmeldung kann vom Kunden veranlasst werden durch Betätigung einer bestimmten Funktion auf seinem Mobilfunktelefon oder kann durch den Provider oder einen Dritten angeboten werden; indem der Kunde ein Angebot, eine Aufforderung und dergleichen auf seinem Mobilfunkgerät erhält, die er durch eine weitere Handlung annimmt. Danach erfolgt die Abfrage 6 der Bonuspunkte, bei der die einzelnen Bonusstände bei den Bonuspartnern abgefragt werden. Danach oder parallel dazu erfolgt eine Umrechnung 7 der Bonuspunkte in Telefonieminuten, Telefonguthaben, etc. Die Umrechnung erfolgt entsprechend der partnerspezifischen Konditionen und die errechneten Gesprächsguthaben werden auf das Display des Kunden übertragen 8, so dass der Kunde eine Information auf sein Display erhält, über welche Gesprächsguthaben er bei Nutzung der verschiedenen Bonusprogrammen bei verschiedenen Partnern verfügt. Die Alternativen sind gereiht. Details dazu sind auch in Fig. 4 und 6 dargestellt.

Der Kunde wählt 9 nun den Leistungsträger, also den Bonuspartner aus, zu dessen Lasten er telefonieren möchte. Nach entsprechender Auswahl erhält 10 der Kunde eine Information über den Leistungsträger auf dem Display, so dass sich der Name des Leistungsträgers ähnlich wie ein Betreiberlogo eines normalen Telefonproviders auf dem Display erscheint. Diese Information des Leistungsträgers hat während der gesamten Zeit Bestand, in der der Kunde diesen Leistungsträger gewählt hat. Der Kunde kann während dieser Zeit weitere Informationen vom Leistungsträger oder Dritten erhalten, insbesondere Werbebotschaften, Angebote, Spiele, Nachrichten etc. Bei Bedarf oder automatisch erhält 11 der Kunde Informationen über das aktuelle Guthaben und wird informiert, wenn das Guthaben nahezu oder vollständig aufgebraucht ist 12, Bei aufgebrauchten Gesprächsguthaben wird das Gespräch über einen zweiten ausgewählten Bonuspartner weitergeführt, unterbrochen 13 oder wechselt auf Normaltelefonie des entsprechenden Providers, das heißt, die Gesprächsminuten werden im letzteren Fall zu einem anderen Tarif abgerechnet. Bevorzugt ist eine Variante, bei der das Gespräch als "Bonus-Kredit" weitergeführt wird. Je nach Ausmaß der beabsichtigten Kundenbindung wird darunter folgendes verstanden:
a) Der Kunde muss für die Leistung normal bezahlen;
b) ein Ausgleich kann durch weiteren Umsatz bei dem entsprechenden Bonuspartner oder
c) bei einem anderen Bonuspartner erfolgen.

Wenn das Gesprächsguthaben verbraucht ist, kann der Nutzer wieder zum Auswahlmenü Bonustelefonie 4 zurückkehren und gegebenenfalls einen neuen Provider oder Standardtelefonie auswählen.

## Patentansprüche

1. Verfahren zur zeitlich oder mengenmäßig beschränkten Zurverfügungstellung der Nutzung eines Telekommunikationsnetzwerkes, mit einem ersten Datensatz, der auf einem ersten Server gespeichert ist und der die zeitlichen oder mengenmäßigen Nutzungsberechtigung des Telekommunikationsnetzwerkes durch einen Nutzer regelt;
mit folgenden Schritten:
- Erwerb von Zusatzguthaben, welches in Verbindung steht mit einem Bonuspartner, durch den Nutzer;
- Einlösen des Zusatzguthabens durch den Nutzer und dabei Veränderung des ersten Datensatzes auf dem ersten Server, derart dass die zeitliche oder mengenmäßige Nutzungsberechtigung des Telekommunikationsnetzwerkes durch den Nutzer geändert wird;
- optional: Übermittlung der Erlaubnis des Nutzers der Darstellung eines dem Bonuspartner zugeordneten Betreiberlogos auf einem Telekommunikationsgerät des Nutzers;
- Darstellen eines dem Bonuspartner zugeordneten Betreiberlogos auf dem Telekommunikationsgerät, vorzugsweise auf dem Display des Mobiltelefons,

2. Verfahren nach einem der vorherigen Ansprüche, wobei der erste Datensatz ein Guthaben eines Kundenkontos des Nutzers ist, wobei das Kundenkonto vorzugsweise als Prepaid-Vertrag geführt wird.

3. Verfahren nach einem der vorherigen Ansprüche, wobei nach erfolgter Erhöhung des Guthabens Werbemittel, beispielsweise SMS, MMS oder Emails, die vorzugsweise in Verbindung mit dem ausgewählten Bonuspartner stehen, versendet werden.

4. Verfahren zur zeitlich oder mengenmäßig beschränkten
Zurverfügungstellung der Nutzung eines Telekommunikationsnetzwerkes,
- mit einem ersten Datensatz, der auf einem ersten Server gespeichert ist und der die zeitlichen oder mengenmäßigen Nutzungsberechtigung des Telekommunikationsnetzwerkes durch einen Nutzer regelt;
- mit einer Vielzahl von weiteren Datensätzen, die auf dem ersten Server bzw. auf einem zweiten Server bzw. einer Vielzahl von weiteren Servern gespeichert sind und die dem Nutzer zugeordnet sind; mit folgenden Schritten:
a. erstes Übertragen der Vielzahl von weiteren dem Nutzer zugeordneten Datensätzen vom ersten Server bzw. zweiten Server bzw. der Vielzahl von weiteren Servern auf ein dem Nutzer zugeordnetes Telekommunikationsgerät über das Telekommunikationsnetzwerk;
b. erstes Wiedergeben der übertragenen weiteren Datensätze mittels des Telekommunikationsgerätes;
c. Auswahl eines der Datensätze durch den Nutzer;
d. zweites Übertragen der vom Nutzer getroffenen Auswahl über das Telekommunikationsnetzwerk an den ersten Server oder zweiten Server oder die weiteren Server;
e. erste Veränderung eines der weiteren Datensätze, welcher dem vom Nutzer ausgewählten Datensatz entspricht, auf dem ersten Server bzw. zweiten Server bzw. dem weiteren Servern, auf dem der vom Nutzer ausgewählte Datensatz gespeichert ist;
f. zweite Veränderung des ersten Datensatz auf dem ersten Server, derart dass die zeitliche oder mengenmäßige Nutzungsberechtigung des Telekommunikationsnetzwerkes durch den Nutzer geändert wird.

5. Verfahren nach einem der vorherigen Ansprüche, wobei das Telekommunikationsnetzwerk ein Mobilfunknetz ist und/oder das Telekommunikationsgerät ein Mobilfunkgeräte ist.

6. Verfahren nach einem der vorherigen Ansprüche, wobei ein Computerprogramm auf dem Telekommunikationsgerät installiert ist, welches die Schritte a) bis d) durchführt und dem Nutzer ein Menu zur Auswahl aus Schritt c) bereitstellt.

7. Verfahren nach einem der vorherigen Ansprüche, wobei das erste Übertragen aus Schritt a) durch den Nutzer mittels des Telekommunikationsgerätes gestartet wird, insbesondere durch einen Anruf, Start eines Computerprogramms oder eine Eingabe.

8. Verfahren nach einem der vorherigen Ansprüche, wobei vor dem ersten Wiedergeben aus Schritt b) die übertragenen weiteren Datensätze vor oder nach der ersten Übertragung auf das Telekommunikationsgerät umgerechnet werden in Werte, die einer möglichen zeitlichen oder mengenmäßigen Nutzungsberechtigung des Telekommunikationsnetzes entsprechen.

9. Verfahren nach einem der vorherigen Ansprüche, wobei das erste und/oder zweite Übertragen aus Schritt a) bzw. d) und/oder die Übertragung des Computerprogramms aus Anspruch 6 über mobilfunkbasierte Datenfernübertragung, insbesondere SMS, MMS, GPRS und/oder UMTS erfolgt.

10. Verfahren nach einem der vorherigen Ansprüche, wobei das erste Wiedergeben aus Schritt b) auf einem Display des Telekommunikationsgeräts erfolgt, insbesondere mittels eines Menus
und/oder
die Auswahl eines der Datensätze aus Schritt c) mittels des Telekommunikationsgeräts vorgenommen wird;

11. Verfahren nach einem der vorherigen Ansprüche, wobei das erste Übertragen und Wiedergeben aus Schritt a) und b) über eine Gesprächsverbindung erfolgt, insbesondere mittels eines Sprachcomputers
und/oder
das zweite Übertragen aus Schritt c) und d) über MFWV erfolgt oder mittels Sprache, die einen Sprachcomputer ansteuert.

12. Verfahren nach einem der vorherigen Ansprüche, wobei bei der Auswahl aus Schritt c) der Nutzer bestimmt, in welchem Ausmaß die Veränderung aus den Schritten e) und f) erfolgt
und/oder
der erste Datensatz ein Guthaben eines Kundenkontos des Nutzers ist.

13. Verfahren nach einem der vorherigen Ansprüche, wobei das
Kundenkonto als Prepaid-Vertrag geführt wird.

14. Verfahren nach einem der vorherigen Ansprüche, wobei die Vielzahl der
weiteren Datensätze lediglich Informationen über telekommunikationsnetzwerksfremde Guthaben des Nutzers aufweisen und insbesondere einer Vielzahl von dem Nutzer zugeordneten Bonusguthaben bei einer Vielzahl von Bonuspartnern entspricht.

15. Verfahren nach einem der vorherigen Ansprüche, wobei bei der Auswahl eines bestimmten Bonusguthabens aus Schritt c) dieses reduziert wird und das Guthaben des Kundenkontos des Nutzers erhöht wird, wobei Reduktion und Erhöhung in einem bestimmten, dem jeweiligen Bonuspartner und/oder Nutzer zugeordnetem Verhältnis stehen.

16. Verfahren nach einem der vorherigen Ansprüche, wobei auf dem
zweiten oder den weiteren Servern jeweils Fremddatensätze gespeichert sind, die dem Bonusguthaben von Fremdnutzern entsprechen, wobei zu den Fremdnutzern kein erster Datensatz auf dem ersten Server existiert.

17. Verfahren nach einem der vorherigen Ansprüche, wobei der zweite oder die weiteren Server über Datenfernübertragung mit dem ersten Server verbunden sind und insbesondere nicht auf dem gleichen Grundstück wie der erste Server stehen und/oder nicht vom Betreiber des Telekommunikationsnetzwerkes administriert werden.

18. Verfahren nach einem der vorherigen Ansprüche, wobei nach erfolgter Auswahl des Bonusguthabens aus Schritt c) und nach erfolgter Erhöhung des Guthabens aus Schritt f) ein dem Bonuspartner zugeordnetes Betreiberlogo auf dem Telekommunikationsgerät, vorzugsweise auf dem Display des Mobiltelefons, dargestellt wird.

19. Verfahren nach einem der vorherigen Ansprüche, wobei nach erfolgter Auswahl des Bonusguthabens aus Schritt c) und nach erfolgter Erhöhung des Guthabens aus Schritt f) durch eine zeitliche oder mengenmäßige Nutzung des Telekommunikationsnetzes eine entsprechende Reduzierung des Guthabens erfolgt.

20. Verfahren nach einem der vorherigen Ansprüche, wobei nach erfolgter Auswahl des Bonusguthabens aus Schritt c) und nach erfolgter Erhöhung des Guthabens aus Schritt f) Werbemittel, beispielsweise SMS, MMS oder Emails, die vorzugsweise in Verbindung mit dem dem ausgewählten Bonusguthaben zugeordneten Bonuspartner stehen, versendet werden.

21. Verfahren nach einem der vorherigen Ansprüche, wobei in einer Zentralen Datenbank eine oder mehrere der folgenden Zuordnungen hinterlegt sind, die das Verfahren abruft und verwendet:
- Nutzer - Teilnahme an Bonussystemen oder Bonuspartnern;
- Bonuspartner - Daten zu den Bonussystemen
- Bonussysteme - Umrechnungsfaktoren des Bonusguthabens in Guthaben;
- Bonuspartner - Umrechnung des Bonusguthabens in Guthaben;
- Bonuspartner - Betreiberlogo; und/oder
- Bonuspartner - Werbemittel.

22. Computersystem mit einer Vielzahl zumindest zeitweise untereinander verbundener Server und einem Telekommunikationsgerät, insbesondere Mobilfunkgerät, wobei auf dem Computersystem Programme zur Durchführung des Verfahrens nach einem der vorherigen Ansprüche gespeichert und/oder lauffähig sind.
